(19) Europäisches Patentamt
European Patent Office
Office européen des brevets

(11) **EP 3 981 247 A1**

(12) **EUROPÄISCHE PATENTANMELDUNG**

(43) Veröffentlichungstag:
**13.04.2022 Patentblatt 2022/15**

(21) Anmeldenummer: **21000281.2**

(22) Anmeldetag: **05.10.2021**

(51) Internationale Patentklassifikation (IPC):
**A01K 15/02** (2006.01)     **A01K 13/00** (2006.01)

(52) Gemeinsame Patentklassifikation (CPC):
**A01K 13/004**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **07.10.2020 DE 102020006125**

(71) Anmelder: **Baß Antriebstechnik GmbH**
**91607 Gebsattel (DE)**

(72) Erfinder: **Baß, Peter**
**91607 Gebsattel (DE)**

(74) Vertreter: **Küchler, Stefan**
**Stefan T. Küchler**
**Patentanwalt**
**Färberstraße 20**
**90402 Nürnberg (DE)**

(54) **VORRICHTUNG ZUM BÜRSTEN VON TIEREN**

(57) Die Erfindung richtet sich auf eine Vorrichtung zum Bürsten von Tieren mit wenigstens einer um eine Achse drehbar gelagerten Bürste, die von einem Motor antreibbar ist, wobei im Stillstand des Motors permanent dessen Drehung überwacht wird, um eine nicht durch eine Ansteuerung des Motors ausgelöste Drehung desselben zu erkennen und diese dann als Kriterium für das Einschalten des Motors zu verwenden.

Fig.1

EP 3 981 247 A1

**Beschreibung**

Die Erfindung richtet sich auf eine Vorrichtung zum Bürsten von Tieren mit wenigstens einer um eine Achse drehbar gelagerten Bürste, die von einem Motor antreibbar ist.

Gattungsgemäße Bürsten werden bspw. in Ställen oder auf Weiden eingesetzt und sollen es dort gehaltenen Kühen, Schweinen oder sonstigen Zuchttieren ermöglichen, sich im Fall eines Juckreizes bürsten zu lassen. Aus Gründen der gebotenen Stromersparnis ist es andererseits nicht möglich, derartige Bürsten permanent laufen zu lassen. Sie sollen sich vielmehr nur bei Bedarf aktivieren lassen und laufen sodann für ein vorgegebenes Zeitintervall. Während sich das Ausschalten daher leicht mittels eines elektrischen oder elektronischen Zeitgeberbausteins leicht realisieren lässt, der sodann den betreffenden Motorschütz auslöst, muss für ein bedarfsgerechtes Einschalten dem Tier bei Bedarf die Möglichkeit geboten werden, sich der Bürstensteuerung bemerkbar zu machen. Bisher wird hierfür zumeist eine horizontal gelagerte Bürste anhebbar gelagert, und eine solche Hubbewegung wird sensiert. Gleichzeitig ist die Bürste im Allgemeinen etwas zu niedrig montiert, so dass ein an einer Bürstung interessiertes Tier sich unter die Bürste stellen und diese dadurch anheben muss, wodurch dann der Bürstvorgang ausgelöst wird. Eine solche anhebbare Montage ist aber mechanisch mit einem nicht unbeträchtlichen Aufwand verbunden; außerdem ist Sorge dafür zu tragen, dass die Bürstvorrichtung nicht zu schwer für das Tier ist - in den meisten Fällen ist daher ein zusätzlicher Gewichtsausgleich erforderlich, beispielsweise in Form eines Gegengewichts od. dgl. Im Übrigen haben auch Tiere mitunter voneinander abweichende Größen, und-dann kann es für ein etwas kleineres Tier schwierig werden, die Bürste so weit anzuheben, bis ein Sensor anspricht und die Bürste einschaltet.

Aus den Nachteilen des beschriebenen Standes der Technik resultiert das die Erfindung initiierende Problem, eine gattungsgemäße Vorrichtung zum Bürsten von Tieren derart weiterzubilden, dass der Wunsch eines Tieres nach einer Bürstbehandlung möglichst unverzüglich und eindeutig sensiert wird, ohne jedoch hierfür einen beträchtlichen konstruktiven Aufwand leisten zu müssen, und ohne dem Tier eine übermäßige Last aufzubürden.

Die Lösung dieses Problems gelingt dadurch, dass im Stillstand des Motors permanent dessen Drehung überwacht wird, um eine nicht durch eine Ansteuerung des Motors ausgelöste Drehung desselben zu erkennen und diese dann als Kriterium für das Einschalten des Motors zu verwenden.

Die Erfindung geht dabei aus von der Erkenntnis, dass ein Tier in dem Wunsch, gebürstet zu werden, an die Bürste herantreten wird und infolge der dabei eintretenden Berührung u.a. auch ein Drehmoment auf die Bürste ausüben wird, die dann zu einer Drehung des Motors führt und sodann erkannt werden kann. Eine Steuerung kann dann so programmiert sein, dass bei Erkennung einer solchen, nicht von der Motorsteuerung hervorgerufenen Drehbewegung des Motors in der Vermutung, dass diese von einem Tier aufgrund des aktuellen Wunsches, gebürstet zu werden, ausgelöst wurde, der Motor eingeschalten wird, um die Bürste zu drehen, beispielsweise bis zum Ablauf einer vorgegebenen Zeitspanne.

Es liegt im Rahmen der Erfindung, dass der Antriebsmotor ein Elektromotor ist und die Stillstandsüberwachung anhand seiner Klemmenspannung erfolgt, wobei eine dort induzierte und erkannte Spannung als Kriterium für das Einschalten des Elektromotors verwendet wird. Diese Maßnahme bietet sich insbesondere an bei Verwendung von Motoren mit einer permanenten Erregung, bspw. in Form von einem oder mehreren, an dem Rotor applizierten Permanentmagneten, welche bei einer Drehung des Rotors in den einzelnen, ständerseitigen Wicklungen Spannungen induzieren, die sodann gemessen werden können. Natürlich lässt sich dieses Prinzip auch realisieren bei einem Motor mit einer Erregerwicklung, sofern jene ständig mit Strom bzw. Spannung versorgt wird. Anstelle oder kumulativ zu einer Überwachung eines derartigen Motors hinsichtlich des Auftretens einer Klemmenspannung könnte auch in dem Luftspalt zwischen Stator und Rotor ein Halleffektsensor oder ein sonstiger, für Magnetfelder sensibler Sensors vorgesehen werden, um eine Änderung des Magnetfeldes oder der Magnetfeldverteilung in der Maschine bzw. in dem Motor, insbesondere in dem Luftspalt, zu sensieren.

Andererseits ist es auch möglich, dass die Stillstandsüberwachung anhand eines vorzugsweise mit dem Motor integrierten Inkrementalgebers erfolgt, wobei eine dort erkennbare Drehung als Kriterium für das Einschalten des Motors verwendet wird. Dieses Prinzip ist völlig unabhängig von der Art des verwendeten Motors, kann aber auch bei einem Elektromotor realisiert werden. Da bei vielen Elektromotoren für eine Regelung ohnehin ein Inkrementalgeber vorgesehen ist, bspw. direkt in das Gehäuse des Motors integriert oder an jenes angeflanscht, ist in diesen Fällen dadurch überhaupt kein Zusatzaufwand erforderlich. Die Stillstandsüberwachung kann dann einfach durch eine Auswerteeinheit für einen solchen Inkrementalgeber realisiert sein. Insbesondere liefert eine zeitliche Betrachtung der Ausgangssignale des Inkrementalgebers einen Messwert für die Drehzahl $n$ des Motors, und je nach Realisierung kann eine Drehzahl ungleich null oder eine Drehzahl größer eines unteren Schwellwertes als Wunsch eines Tieres, sich bürsten zu lassen, interpretiert werden, insbesondere:

$$n \neq 0;$$

oder:

$$|n| \geq \varepsilon.$$

Die Erfindung empfiehlt weiterhin, dass kein externer Sensor vorgesehen ist, insbesondere kein externer - also kein von dem Elektromotor und von der Motorsteuereinrichtung getrennter - Sensor. Damit lässt sich der für eine erfindungsgemäße Stillstandsüberwachung notwendige Zusatzaufwand minimieren oder auf eine Auswerteelektronik beschränken oder sogar auf eine softwaremäßig implementierte Funktion innerhalb einer Motorsteuereinrichtung.

Es liegt im Rahmen der Erfindung, dass eine um eine vertikale Achse rotierende Bürste pendelnd gelagert ist: Eine derartige Bürste wird nur von der Schwerkraft in ihrer Ausgangslage stabilisiert und kann von einem Tier bei Bedarf seitlich ausgelenkt werden. Dadurch ist einerseits eine Beschädigung der Bürste ausgeschlossen; andererseits kann das Tier mit einer derartigen Bürste die verschiedensten Körperpartien bürsten lassen. Während eine solche Bürste primär zum Bürsten der Flanken eines Tieres geeignet Ist, kann sie dennoch durch geeignete Auslenkurig auch zum Bürsten des Rückens verwendet werden. Aus diesem Grunde ist es möglich, eine solche Bürste alleine zu verwenden, also ohne eine zusätzliche Rückenbürste.

Andererseits ist es auch möglich, dass eine um eine Achse rotierende Bürste nicht pendelnd gelagert ist, sondern um eine starr ausgerichtete Achse drehbar ist. Im Allgemeinen wird die Rotationsachse einer solchen Bürste eher horizontal ausgerichtet sein und nicht vertikal, so dass es sich hierbei eher um eine Rückebürste handelt.

Eine um eine Achse rotierende Bürste kann höhenverstellbar gelagert sein. Dies ist besonders bei um eine horizontale oder annähernd horizontale Achse rotierbare Rückenbürste wichtig, damit unterschiedlich große Tiere jeweils aufrecht stehend von einer derartigen Bürste ihren Rücken bürsten lassen können.

Die Erfindung bietet allerdings auch die Möglichkeit, dass eine um eine Achse rotierende Bürste nicht höhenverstellbar gelagert ist, sondern um eine starre Achse drehbar ist. Dies trifft insbesondere für leicht ansteigend geneigte Bürsten zu, weil sich dann Tiere unterschiedlicher Größen einfach unter verschiedenen Bereichen der Bürste aufhalten können, welche gerade die richtige Bürsthöhe haben. Zusätzlich oder alternativ zu einer Bürste mit leicht ansteigender Bürstenlängsachse können dazu auch rotierende Bürsten verwendet werden, deren Borstenlängen sich entlang der Rotationsachse verändern, bspw. in Form eines Kegels als Einhüllender einer solchen Bürste.

Die Erfindung lässt sich dahingehend weiterbilden, dass die Motorsteuereinrichtung in einem Gehäuse angeordnet ist, das an dem oder im Bereich des Motoranschlusskastens festgelegt ist. Solchenfalls kann eine werksseitig bereits mit dem Motor oder dem Motoranschlusskasten integrierte Motorsteuereinrichtung verwendet werden.

Schließlich entspricht es der Lehre der Erfindung, dass die Motorsteuereinrichtung aufweist:

a) Eingangsanschlüsse zur Verbindung mit einem vorzugsweise zwei- oder dreiphasigen Stromnetz; sowie

b) Ausgangsanschlüsse zur Verbindung mit dem Motor; sowie ggf.

c) einen Steueranschluss, an welchem ein Schalter oder Not-Aus-Schalter anschließbar ist.

Damit ist die äußere Beschaltung der Motorsteuereinrichtung vergleichbar mit der eines Motoranschlusskastens und kann von jedem Elektriker oder gar Mechaniker installiert werden.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

Fig. 1　eine erste Ausführungsform der Erfindung mit zwei an einen gemeinsamen Antrieb gekoppelten Bürsten; sowie

Fig. 2　eine zweite Ausführungsform der Erfindung mit einer einzigen Bürste, die von einem etwa horizontalen Auslegerarm getragen wird und von dessen freiem Ende etwa vertikal pendelnd herabhängt; sowie

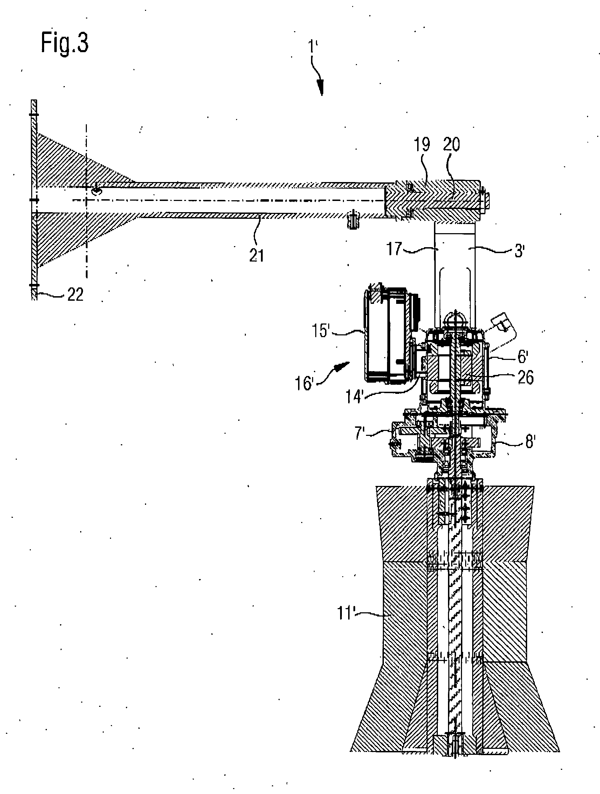

Fig. 3　einen Schnitt durch die Fig. 2 entlang einer vertikalen, durch die Längsachse der vertikal herabhängenden Bürste sowie durch die Längsachse eines jene tragenden, etwa horizontal auskragenden Ausiegerarms aufgespannte Ebene.

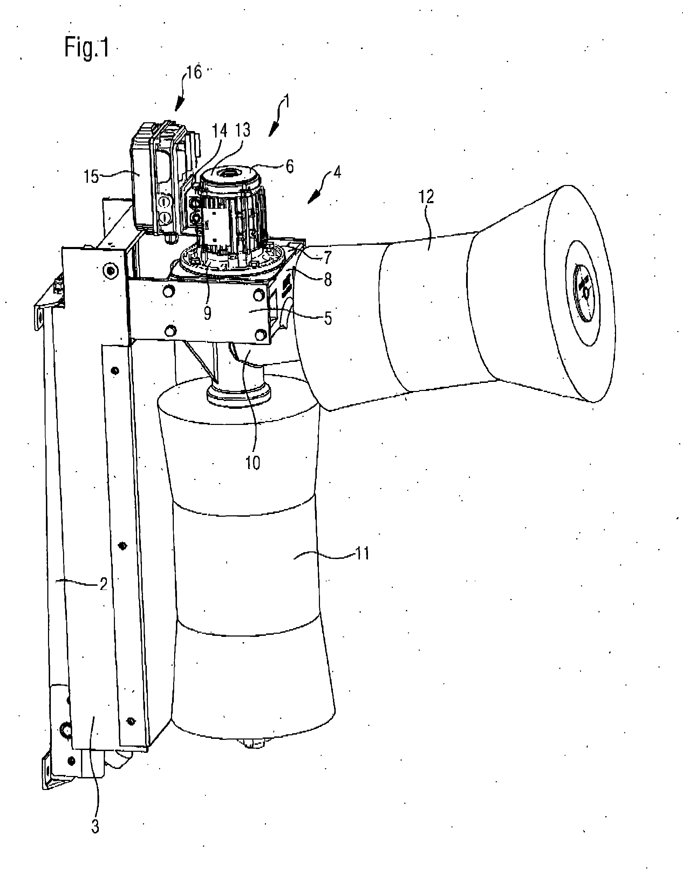

Die in Fig. 1 dargestellte Vorrichtung 1 zum Bürsten von Tieren kann z.B. in einem Stall oder auf einer Weide installiert werden. Man erkennt einen Montagerahmen 2, der an einer stabilen Tragkonstruktion montierbar ist, beispielsweise an einer Hauswand. An diesem Montagerahmen 2 kann ein beweglicher Rahmen 3 höhenverstellbar gelagert sein. Eine Höhenverstellung ist dann erforderlich, wenn Tiere unterschiedlicher Größe sich bürsten lassen wollen bzw. sollen; anderenfalls kann auf eine solche Höhenverstellung verzichtet werden.

An diesem beweglichen Rahmen 3 - oder, falls eine Höhenverstellung nicht gewünscht ist, unmittelbar an dem Montagerahmen 2 - ist in einer Höhe über dem Boden von etwa 1 bis 2 m eine Antriebseinheit 4 befestigt, insbesondere über von dem Rahmen 2, 3 seitlich auskragende Halteflansche 5.

Bevorzugt umfasst die Antriebseinheit 4 neben dem eigentlichen Motor 6 ein Getriebe 7, um die Motordrehzahl zu reduzieren. Das Getriebegehäuse 8 kann zwischen den Halteflanschen 5 eingefügt und daran festgeschraubt sein.

Bevorzugt sitzt der Antriebsmotor 6 oben auf dem Getriebegehäuse 8; zu diesem Zweck kann ein Motorschild 9 an der Oberseite des Getriebegehäuses 8 angeflanscht sein.

Der Ausgang des Getriebes 7 befindet sich an der Unterseite des Getriebegehäuses 8. Dort ist unmittelbar ein Verzweigungsgetriebe 10 angeschlossen. Die Längs- bzw. Drehachsen der beiden Ausgangsanschlüsse des Verzweigungsgetriebes 10 verlaufen unter einem Zwischenwinkel von 70° bis 130° zueinander, vorzugsweise derart, dass die Drehachse einer ersten, daran angeschlossenen Bürste 11 vertikal nach unten weist; während die Drehachse einer zweiten, an das Verzweigungsgetriebe 10 angeschlossenen Bürste 12 entweder etwa horizontal auskragt oder leicht nach oben weist.

Bei dem Motor 6 handelt es sich bevorzugt um einen Elektromotor, beispielsweise um einen Drehstrom-Asynchronmotor. An dessen Gehäuse 13 befindet sich ein Anschlusskasten 14, in welchem die Motoranschlussklemmen untergebracht sind.

An dem Deckel des Motor-Anschlusskastens 14 ist ein Gehäuse 15 befestigt, beispielsweise angeschraubt, in welchem eine Steuereinrichtung 16 für den Motor 6 untergebracht ist. Damit die Motor-Steuereinrichtung 16 jederzeit leicht zugänglich ist, kann das Gehäuse 15 aus einer Schale 23 bestehen, die an dem Motor-Anschlusskasten 14 festgelegt ist, und aus einem jene Schale 23 abschließenden, durch Lösen einiger Schrauben öffenbaren Deckel 24.

Die Motorsteuereinrichtung 16 ist derart ausgebildet, dass im Stillstand des Motors 6 permanent dessen Drehung überwacht wird, um eine nicht durch eine Ansteuerung des Motors 6 ausgelöste Drehung desselben zu erkennen und diese dann als Kriterium für das Einschalten des Motors 6 zu verwenden.

Zu diesem Zweck sind an den Motorklemmen des Motors 6 oder an damit verbundenen Leitern ein oder mehrere Spannungssensoren angeordnet, welche eine oder mehrere Phasenspannung(en) und/oder eine oder mehrere der verketteten Spannungen des Motors sensieren und einer Steuerelektronik mitteilen, falls dort bei ausgeschaltetem Motor 6 dennoch eine Spannung induziert wird. Denn diese kann nur darauf zurückzuführen sein, dass eine oder beide Bürsten 11, 12 von einem Tier, z.B. einer Kuh, gedreht werden in dem Wunsch, sich dort bürsten zu lassen, da ein sich an einer Bürste 11, 12 reibendes Tier unweigerlich auch die Bürste(n) 11, 12 und somit indirekt auch den Motor 6 in Bewegung versetzt.

Dazu ist es vorteilhaft, wenn die Untersetzung des Getriebes 7 nicht so groß eingestellt ist, dass sich selbsthemmende Eigenschaften ergeben. Mit anderen Worten, die Drehzahl-Untersetzung des Getriebes 7 sollte nicht zu groß gewählt werden, damit die Drehmoment-Übersetzung nicht zu groß ist.

Sobald ein Sensor der Steuereinrichtung 16 meldet, dass sich eine Bürste 11, 12 bewegt, ohne eingeschaltet zu sein, so wird sodann der Motor 6 für ein vorgegebenes Zeitintervall aktiviert, um das betreffende Tier aktiv zu bürsten.

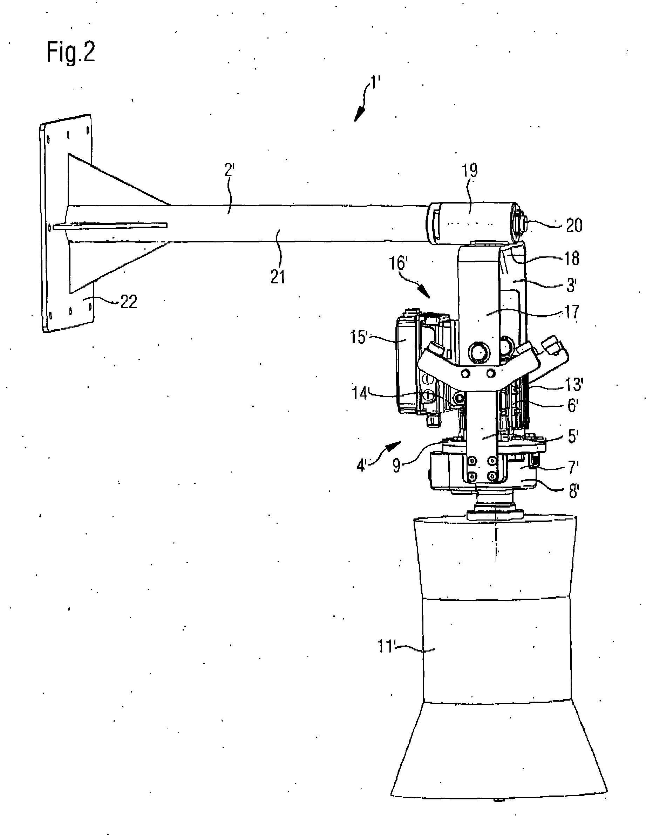

Die zweite, in Fig. 2 wiedergegebene Ausführungsform der Erfindung umfasst eine Vorrichtung 1' zum Bürsten von Tieren, die sich von der vorangehenden dadurch unterscheidet, dass hier nur eine einzige Bürste 11' vorgesehen ist.

Die Drehachse 25 dieser Bürste 11' ist etwa vertikal orientiert. Die Bürste 11' hängt an einem Getriebe 7', dessen Gehäuse 8' einen oberseitigen Anschluss für den Antriebsmotor 6' aufweist. Das Getriebegehäuse 8' ist zwischen zwei Halteflanschen 5' befestigt, insbesondere angeschraubt.

Die beiden Halteflansche 5' sind als Schenkel 17 eines U-förmigen Halterahmens 3' ausgebildet, an dessen Mittelsteg 18 eine Muffe 19 angeordnet ist, beispielsweise angeschweißt. Bevorzugt erstreckt sich die Längsachse der Muffe 19 lotrecht zu der von den beiden Schenkeln 17 des U-förmigen Halterahmens 3' aufgespannten Ebene. Diese Muffe 19 ist auf einer Achse 20 drehbeweglich aufgesteckt, so dass die Bürste 11' um die Achse 20 pendelnd gelagert ist.

Die Achse 20 ist über einen etwa horizontal auskragenden Bügel 21 mit einer Montageplatte 22 verbunden, zu deren Ebene der Bügel 21 etwa lotrecht verläuft. Achse. 20, Bügel 21 und Montageplatte 22 bilden zusammen einen Montageausleger 2', der an einer stabilen Tragkonstruktion montierbar ist, beispielsweise an einer Hauswand.

Falls eine Pendelung der Bürste 11' nicht erforderlich ist, kann der Rahmen 3' mit dem Montageausleger 2' unbeweglich verbunden sein.

Auch bei dem Motor 6' handelt es sich um einen Elektromotor, beispielsweise um einen Drehstrom-Asynchronmotor, der an seinem Gehäuse 13' einen Anschlusskasten 14' aufweist, worin die Motoranschlussklemmen untergebracht sind.

An dem Deckel des Motoranschlusskastens 14' ist ein Gehäuse 15' befestigt, beispielsweise angeschraubt, in welchem eine Steuereinrichtung 16' für den Motor 6' untergebracht ist.

Die Motorsteuereinrichtung 16' überwacht im Stillstand des Motors 6' permanent dessen Drehung, um eine nicht durch eine Ansteuerung des Motors 6' ausgelöste Drehung desselben zu erkennen und diese dann als Kriterium für das Einschalten des Motors 6' zu verwenden.

Zu diesem Zweck ist wenigstens ein Motorspannungssensor vorgesehen, der an den Motorklemmen des Motors 6' oder an damit verbundenen Leitern angeschlossen ist, um eine oder mehrere Phasenspannung(en) und/oder eine oder mehrere der verketteten Spannungen des Motors 6' zu sensieren. Die Motorsteuereinreichtung 16' kann anhand des Sensorsignals erkennen, ob dort bei ausgeschaltetem Motor 6' dennoch eine Spannung induziert wird. Denn diese kann nur darauf zurückzuführen sein, dass die Bürste 11' von einem Tier gedreht wird in dem Wunsch, sich dort bürsten zu lassen. Denn dabei wird von dem sich daran reibenden Tier unweigerlich auch die Bürste 11' und somit indirekt auch der Motor 6' in Bewegung versetzt.

Dabei ist es vorteilhaft, wenn die Untersetzung des Getriebes 7' nicht so groß eingestellt ist, dass sich selbsthemmende Eigenschaften ergeben. Mit anderen Worten, die Drehzahl-Untersetzung des Getriebes 7' sollte nicht zu groß gewählt sein, damit die Drehmoment-Übersetzung nicht zu groß ist.

Sobald ein Sensor der Steuereinrichtung 16' eine Induktionsspannung an den Motorklemmen meldet, ohne dass der Motor 6' eingeschaltet ist, so aktiviert die Steuereinriechtung 16' den Motor 6' für ein vorgegebenes Zeitintervall, um das betreffende Tier aktiv zu bürsten.

In den beschriebenen Ausführungsformen kann der Motor 6; 6' z.B. ein permanenterregter Gleichstrommotor sein oder ein Drehstrom-Synchronmotor, dessen Rotor 26 mit Permanentmagneten bestückt ist, so dass durch eine Drehung des Rotors in der oder den Statorspulen Spannungen erzeugt werden.

Solchenfalls muss ausschließlich die Auswerteelektronik ständig eingeschalten sein, um eine Drehung des Motors anhand von dessen induzierter Statorspannung erkennen zu können.

Bevorzugt wird zu diesem Zweck zunächst ein Spannungssignal an wenigstens einer Statorwicklung ggf. mit einem Spannungsteiler herabgeteilt und gleichgerichtet, bevorzugt mit einem Brückengleichrichter, um auch negative Induktionsspannungen erkennen zu können. Bei einer mehrphasigen, insbesondere dreiphasigen Statorwicklung kann ein Dreiphasengleichrichter verwendet werden, insbesondere eine Drehstrombrücke. Diese kann je nach Ausführungsform unmittelbar an den Motorklemmen angeschlossen sein oder über zwischengeschaltete Spannungteiler.

Das gleichgerichtete Signal kann sodann von einem Komparator mit einem vorgegebenen oder einstellbaren Schwellwert verglichen werden, der einen logischen High-Pegel erzeugt, wenn dieser Schwellwert von dem gleichgerichteten Signal überschritten wird und also der Motor 6; 6' gedreht wird.

Um eine Drehung des nicht angetriebenen Motors 6; 6' von einer Drehung infolge von dessen Antrieb zu unterscheiden, sollte die Ansteuerschaltung selbst ein Signal generieren, welches beim aktiven Antrieb bspw. einen Low-Pegel aufweist und bei stillgesetztem Antrieb dann einen High-Pegel annimmt.

Dieses den stillgesetzten Antrieb indizierende Signal kann sodann mit dem Komparator-Ausgangssignal mit einem UND-Gatter verknüpft werden, so dass am Ausgang des UND-Gatters nur dann ein Signal anliegt, wenn sich der Motor 6; 6' trotz fehlender Ansteuerung dreht.

Dieses Signal kann sodann auf ein Halteglied gelegt werden, welches mit einer steigenden Flanke auf einen High-Pegel an seinem Ausgang umschaltet, und kann verwendet werden, um den Motor 6; 6' aktiv einzuschalten.

Schließlich kann das Halteglied mit einem Zeitglied integriert oder gekoppelt sein, so dass das Motor-Einschaltsignal nach einer vorgegebenen oder vorgebbaren Zeit wieder auf Low zurückkehrt und die Bürste(n) 11, 12; 11' wieder stillgesetzt wird (werden).

Falls es sich um einen anderen Motor handelt, also einen Motor ohne Permanenterregung, müsste eine Erregerwicklung ständig oder zumindest ständig gepulst mit Strom versorgt werden. Um die damit verbundenen Verluste zu vermeiden, kann stattdessen zur Sensierung einer. Drehung ein Inkrementalgeber oder ein anderer Drehgeber verwendet werden, der bevorzugt unmittelbar in dem Gehäuse des Motors 6; 6' integriert ist und ein von dessen Rotordrehung abgeleitetes Mess-Signal abgibt. Die Signalleitungen eines solchen Sensors können innerhalb des Motors 6; 6' bis zu dessen Motor-Anschlusskasten 14 verlegt sein und stehen dort für die Auswerteelektronik zur Verfügung.

In diesem Fall kann ein solches Mess-Signal eines Inkrementalgebers zunächst aufbereitet werden, um eine Drehgeschwindigkeit zu bestimmen, und sodann könnte diese Drehgeschwindigkeit mit einem vorgegebenen Grenz- oder Schwellwert verglichen werden, bspw. über eine in der Auswerteelektronik implementierte Software, um eine Drehung des betreffenden Motors 6; 6' zu erkennen.

Kumulativ oder alternativ dazu besteht auch die Möglichkeit, die Flanken eines Inkrementalgeber-Sensors unmittelbar als Indiz für eine Drehung des Motors 6; 6' zu verwenden, bspw. indem ein digitales Ausgangssignal eines Inkrementalgeber-Sensors - wahlweise beide mittels ODER verknüpften Phasen oder nur eine Phase desselben - unmittelbar auf einen Haltebaustein gelegt wird, so dass jede steigende Flanke den Haltebaustein veranlasst, am Ausgang einen High-Pegel anzunehmen, der sodann eine Drehung des Motors 6; 6' ohne dessen Antrieb signalisiert.

Ein solches Signal kann als Anlass verwendet werden, um den Motor 6; 6' für ein vorgegebenes oder vorgebbares Zeitintervall aktiv anzutreiben. Im Anschluss an ein solches Zeitintervall kann der Motor 6; 6' wieder stillgesetzt werden.

## Bezugszeichenliste

| | | | |
|---|---|---|---|
| 1 | Vorrichtung | 26 | Rotor |
| 2 | Montagerahmen | 27 | |
| 3 | beweglicher Rahmen | 28 | |
| 4 | Antriebseinheit | 29 | |
| 5 | Halteflansch | 30 | |
| 6 | Motor | 31 | |
| 7 | Getriebe | 32 | |
| 8 | Getriebegehäuse | 33 | |

(fortgesetzt)

| 9 | Motorschild | 34 |
|---|---|---|
| 10 | Verzweigungsgetriebe | 35 |
| 11 | Bürste | 36 |
| 12 | Bürste | 37 |
| 13 | Gehäuse | 38 |
| 14 | Anschlusskasten | 39 |
| 15 | Gehäuse | 40 |
| 16 | Steuereinrichtung | 41 |
| 17 | Schenkel | 42 . |
| 18 | Mittelsteg | 43 |
| 19 | Muffe | 44 |
| 20 | Achse | 45 |
| 21 | Bügel | 46 |
| 22 | Montageplatte | 47 |
| 23 | Schale | 48 |
| 24 | Deckel | 49 |
| 25 | Drehachse | 50 |

## Patentansprüche

1. Vorrichtung (1;1') zum Bürsten von Tieren mit wenigstens einer um eine Achse drehbar gelagerten Bürste (11,12;11'), die von einem Motor (6;6') antreibbar ist, **gekennzeichnet durch** eine Motorsteuereinrichtung (16;16'), welche derart ausgebildet ist, dass im Stillstand des Motors (6;6') permanent dessen Drehung überwacht wird, um eine nicht durch eine Ansteuerung des Motors (6;6') ausgelöste Drehung desselben zu erkennen und diese dann als Kriterium für das Einschalten des Motors (6;6') zu verwenden.

2. Vorrichtung (1;1') nach Anspruch 1, **dadurch gekennzeichnet, dass** der Antriebsmotor (6;6') ein Elektromotor ist und die Stillstandsüberwachung anhand seiner Klemmenspannung erfolgt, wobei eine dort induzierte und erkannte Spannung als Kriterium für das Einschalten des Elektromotors (6;6') verwendet wird.

3. Vorrichtung (1,1') nach Anspruch 1 oder 2, **dadurch gekennzeichnet, dass** die Stillstandsüberwachung anhand eines mit dem Motor (6;6') integrierten Inkrementalgebers erfolgt, wobei eine dort erkennbare Drehung als Kriterium für das Einschalten des Motors (6;6') verwendet wird.

4. Vorrichtung (1;1') nach einem der Ansprüche 1 bis 3, **dadurch gekennzeichnet, dass** kein externer Sensor vorgesehen ist.

5. Vorrichtung (1;1') nach einem der vorhergehenden Ansprüche, **dadurch gekennzeichnet, dass** eine um eine vertikale Achse rotierende Bürste (11') pendelnd gelagert ist.

6. Vorrichtung (1;1') nach einem der Ansprüche 1 bis 4, **dadurch gekennzeichnet, dass** eine um eine Achse rotierende Bürste (11,12;11') nicht pendelnd gelagert ist, sondern um eine starre Achse drehbar ist.

7. Vorrichtung (1;1') nach einem der vorhergehenden Ansprüche, **dadurch gekennzeichnet, dass** eine um eine Achse rotierende Bürste (11,12;11') höhenverstellbar gelagert ist.

8. Vorrichtung (1;1') nach einem der Ansprüche 1 bis 6, **dadurch gekennzeichnet, dass** eine um eine Achse rotierende Bürste (11,12;11') nicht höhenverstellbar gelagert ist, sondern um eine starre Achse drehbar ist.

9. Vorrichtung (1;1') nach einem der vorhergehenden Ansprüche, **dadurch gekennzeichnet, dass** die Motorsteuereinrichtung (16;16') in einem Gehäuse (15;15') angeordnet ist, das an dem oder im Bereich des Motoranschlusskastens (14) festgelegt ist.

10. Vorrichtung (1;1') nach einem der vorhergehenden Ansprüche, **dadurch gekennzeichnet, dass** die Motorsteuereinrichtung (16;16') aufweist:

a) Eingangsanschlüsse zur Verbindung mit einem vorzugsweise zwei- oder dreiphasigen Stromnetz; sowie
b) Ausgangsanschlüsse zur Verbindung mit dem Motor (6;6'); sowie ggf.
c) einen Steueranschluss, an welchem ein Schalter oder Not-Aus-Schalter anschließbar ist.

Fig.1

Fig.2

Fig.3

**Europäisches Patentamt**
**European Patent Office**
**Office européen des brevets**

# EUROPÄISCHER RECHERCHENBERICHT

**Nummer der Anmeldung**

**EP 21 00 0281**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 852 279 A1 (DELAVAL HOLDING AB [SE]) 1. April 2015 (2015-04-01) | 1,3-6, 8-10 | INV. A01K15/02 A01K13/00 |
| Y | * [0025, 0026, 0034]; Anspruch 1; Abbildungen 1-4 * | 7 | |
| X | DE 20 2016 102264 U1 (SCHURR GERÄTEBAU GMBH [DE]) 18. Mai 2016 (2016-05-18) * Absatz [0006]; Ansprüche 1-2; Abbildung 1 * | 1-4,9,10 | |
| Y | EP 2 008 512 A1 (BAS ANTRIEBSTECHNIK GMBH [DE]) 31. Dezember 2008 (2008-12-31) * Absatz [0061] * | 7 | |

**RECHERCHIERTE SACHGEBIETE (IPC)**

**A01K**

Der vorliegende Recherchenbericht wurde für alle Patentansprüche erstellt

| Recherchenort | Abschlußdatum der Recherche | Prüfer |
|---|---|---|
| **Den Haag** | **4. Februar 2022** | **Steinbock, Lorenz** |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 00 0281

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-02-2022

| Im Recherchenbericht angeführtes Patentdokument | Datum der Veröffentlichung | Mitglied(er) der Patentfamilie | Datum der Veröffentlichung |
|---|---|---|---|
| EP 2852279 A1 | 01-04-2015 | BR 112014029053 A2 | 24-04-2018 |
| | | CA 2871725 A1 | 28-11-2013 |
| | | CL 2014003187 A1 | 20-03-2015 |
| | | CN 104320969 A | 28-01-2015 |
| | | DK 2852279 T3 | 19-09-2016 |
| | | EP 2852279 A1 | 01-04-2015 |
| | | ES 2589735 T3 | 16-11-2016 |
| | | JP 6053228 B2 | 27-12-2016 |
| | | JP 2015520611 A | 23-07-2015 |
| | | KR 20150011358 A | 30-01-2015 |
| | | PL 2852279 T3 | 30-12-2016 |
| | | RU 2014152027 A | 20-07-2016 |
| | | SE 1250525 A1 | 24-11-2013 |
| | | US 2015136039 A1 | 21-05-2015 |
| | | WO 2013176596 A1 | 28-11-2013 |
| DE 202016102264 U1 | 18-05-2016 | KEINE | |
| EP 2008512 A1 | 31-12-2008 | DE 102007029555 A1 | 15-01-2009 |
| | | EP 2008512 A1 | 31-12-2008 |

EPO FORM P0461

Für nähere Einzelheiten zu diesem Anhang : siehe Amtsblatt des Europäischen Patentamts, Nr.12/82